# EUROPÄISCHE PATENTSCHRIFT

(11) **EP 2 555 949 B1**
(45) Veröffentlichungstag und Bekanntmachung des Hinweises auf die Patenterteilung: **17.06.2015**
(21) Anmeldenummer: 11714015.2
(22) Anmeldetag: 04.04.2011
(51) Int. Cl.: B60R 21/06

(54) **SCHUTZVORRICHTUNG FÜR EINEN FAHRZEUGINNENRAUM**
PROTECTION DEVICE FOR THE PASSENGER COMPARTMENT OF A VEHICLE
DISPOSITIF DE PROTECTION POUR L'ESPACE INTÉRIEUR D'UN VÉHICULE

(30) Priorität: 07.04.2010 DE 102010014801
(43) Veröffentlichungstag der Anmeldung: 13.02.2013
(73) Patentinhaber: BOS GmbH & Co. KG, 73760 Ostfildern (DE)
(72) Erfinder: WALTER, Herbert, 73061 Ebersbach (DE)
(74) Vertreter: Patentanwälte Ruff, Wilhelm, Beier, Dauster & Partner
(86) Internationale Anmeldenummer: PCT/EP2011/055206
(87) Internationale Veröffentlichungsnummer: WO 2011/124551

(56) Entgegenhaltungen:
- EP-A2- 2 060 422
- DE-A1- 19 843 044
- DE-B3- 10 341 411
- US-A1- 2002 096 900

## Beschreibung

Die Erfindung betrifft eine Schutzvorrichtung für einen Fahrzeuginnenraum mit einem flexiblen Flächengebilde, das auf einer Wickelwelle zwischen wenigstens einer etwa in Fahrzeughochrichtung aufgespannten Schutzposition und einer auf die Wickelwelle aufgewickelten Ruheposition auf- und abwickelbar gehalten ist, wobei die Wickelwelle lastaufnehmend gestaltet und an gegenüberliegenden Seitenteilen drehbar gelagert ist.

Eine derartige Schutzvorrichtung ist in Form eines Trennnetzes zwischen einem Laderaum und einem Fahrgastraum eines Kraftfahrzeugs aus der DE 197 35 463 C1 bekannt. Die bekannte Trennnetzanordnung weist ein Trennnetz auf, das auf einer Wickelwelle auf- und abwickelbar gehalten ist. Die Wickelwelle selbst ist lastaufnehmend gestaltet, wodurch ein lastaufnehmendes Kassettengehäuse, das die Wickelwelle lagert, entbehrlich ist. Die Wickelwelle ist in gegenüberliegenden Seitenteilen der Trennnetzanordnung drehbar gelagert und weist an ihren gegenüberliegenden Stirnenden Lagerzapfen auf, die durch die Seitenteile hindurch nach außen abragen und in montiertem Zustand der Trennnetzanordnung in fahrzeugfesten Halterungen positioniert sind. Die Lagerzapfen weisen vierkantförmig aufgeweitete Halteköpfe auf, die in korrespondierende Aufnahmetaschen der fahrzeugseitigen Halterungen eingesetzt sind.

Aufgabe der Erfindung ist es, eine Schutzvorrichtung der eingangs genannten Art zu schaffen, die eine variable Befestigung innerhalb des Fahrzeuginnenraumes ermöglicht.

Diese Aufgabe wird dadurch gelöst, dass jedem Seitenteil ein lastaufnehmender Beschlag zugeordnet ist, der einen - auf eine Drehachse der Wickelwelle bezogen - achsparallel zu einer Mitte der Wickelwelle weisenden Verankerungsfortsatz aufweist, der radial nach außen abragende Befestigungsmittel zur Verankerung der Rollowelle an einer Rückenlehnenanordnung eines Fahrzeugsitzes oder an einem Innenraumboden umfasst. Die lastaufnehmenden Beschläge ermöglichen eine Befestigung der Schutzvorrichtung nicht nur stirnseitig im Bereich von gegenüberliegenden Seitenwandbrüstungen des Fahrzeuginnenraumes, wie dies beim Stand der Technik der Fall ist, sondern auch radiale und damit längsseitige Befestigungen parallel zur Wickelwelle. Dies ermöglicht insbesondere eine Befestigung der Schutzvorrichtung an einer aufrecht stehenden oder an einer in Verlängerung eines Laderaumbodens umgeklappten Rückenlehnenanordnung wie auch an einem Laderaumboden selbst. Dadurch ist es möglich, die Schutzvorrichtungen in zwei unterschiedlichen Schutzpositionen des flexiblen Flächengebildes zu fixieren, nämlich in einer teilweise ausgezogenen und in einer vollständig ausgezogenen Schutzposition des Flächengebildes. In besonders bevorzugter Weise ist das flexible Flächengebilde als Trennnetz gestaltet, das im Bereich seiner unteren Stirnkante an der Wickelwelle befestigt ist und das im Bereich seiner in Auszugrichtung vorderen Stirnkante mit einem formstabilen Auszugprofil versehen ist, das in dachseitige Halteaufnahmen lösbar einhängbar ist. Jeder Beschlag ist vorzugsweise als eine formstabile Metallkonstruktion aus Stahlblech oder einer Aluminiumlegierung oder ähnlichem ausgeführt.

In Ausgestaltung der Erfindung ist eine Wickelwellenblockiereinheit vorgesehen, die drehmomentaufnehmend an einem der lastaufnehmenden Beschläge abgestützt ist. Dadurch ist es möglich, eine sichere Rückhaltefunktion des flexiblen Flächengebildes in einer teilweise ausgezogenen Schutzposition zu erreichen.

In weiterer Ausgestaltung der Erfindung weist die Wickelwellenblockiereinheit einen achsparallel zur Drehachse der Wickelwelle abragenden Stützzapfen auf, der formschlüssig an dem Beschlag gehalten ist. Der Stützzapfen ragt vorzugsweise von einem Gehäuse der Wickelwellenblockiereinheit exzentrisch zur Drehachse der Wickelwelle ab.

In weiterer Ausgestaltung der Erfindung sind die beiden lastaufnehmenden Beschläge als Winkelprofile gestaltet, die jeweils einen in einer Radialebene der Drehachse der Wickelwelle erstreckten, radialen Profilschenkel und einen achsparallel zur Mitte der Wickelwelle erstreckten, axialen Profilschenkel umfassen, wobei der radiale Profilschenkel einen koaxial zur Drehachse der Wickelwelle nach außen abragenden Lagerzapfen aufnimmt, und wobei der axiale Profilschenkel mit dem wenigstens einen Befestigungsmittel versehen ist. Der axiale Profilschenkel bildet den Verankerungsfortsatz im Sinne der Erfindung. Vorzugsweise ist das Winkelprofil einstückig, insbesondere durch Kaltumformung, als Stahlblechbauteil hergestellt.

In weiterer Ausgestaltung der Erfindung weist der radiale Profilschenkel eine Aussparung zur formschlüssigen Aufnahme des Stützzapfens der Wickelwellenblockiereinheit auf. Die Aussparung stellt vorzugsweise einen Durchtritt in dem Profilschenkel dar, dessen Querschnitt zu einem Querschnitt des Stützzapfens derart korrespondiert, dass eine im wesentlichen spielfreie Aufnahme des Stützzapfens erzielbar ist.

In weiterer Ausgestaltung der Erfindung durchdringen die Lagerzapfen der Wickelwelle die radialen Profilschenkel der Beschläge und sind an ihren Stirnenden mit aufgeweiteten Halteköpfen versehen, denen korrespondierende Halteaufnahmen an fahrzeugseitigen Halterungen zugeordnet sind. Dadurch ist eine zugfeste Verankerung der Lagerzapfen der Wickelwelle in den stirnseitig flankierenden fahrzeugseitigen Halterungen erzielbar. Zudem wird über die Beschläge, deren radiale Profilschenkel die Lagerzapfen formschlüssig umschließen, auch eine lastaufnehmende Befestigung bei bodenseitiger Verankerung oder einer anderen, längsseitigen Verankerung erzielt.

Weitere Vorteile und Merkmale der Erfindung ergeben sich aus den Ansprüchen sowie aus der nachfolgenden Beschreibung eines bevorzugten Ausführungsbeispiels der Erfindung, das anhand der Zeichnungen dargestellt ist.
- Fig. 1: zeigt schematisch eine Ausführungsform einer erfindungsgemäßen Schutzvorrichtung in einer ersten Schutzposition innerhalb eines Innenraumes eines Kraftfahrzeugs,
- Fig. 2: die Schutzvorrichtung nach Fig. 1 in einer zweiten Schutzposition innerhalb des Fahrzeuginnenraumes,

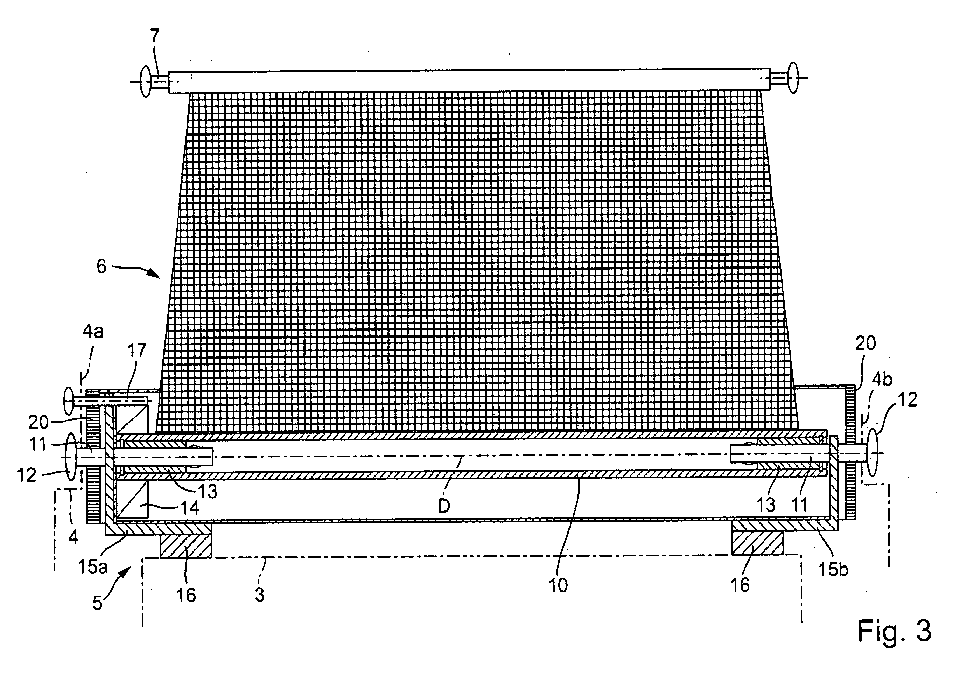

- Fig. 3: in vergrößerter, schematischer Längsschnittdarstellung die Schutzvorrichtung nach den Fig. 1 und 2,
- Fig. 4: perspektivisch einen Teilbereich einer Ausführungsform einer erfindungsgemäßen Schutzvorrichtung nach Fig. 3 unter Weglassung einer Gehäuseummantelung und
- Fig. 5: die Darstellung nach Fig. 4 einschließlich einer zugehörigen Gehäuseummantelung.

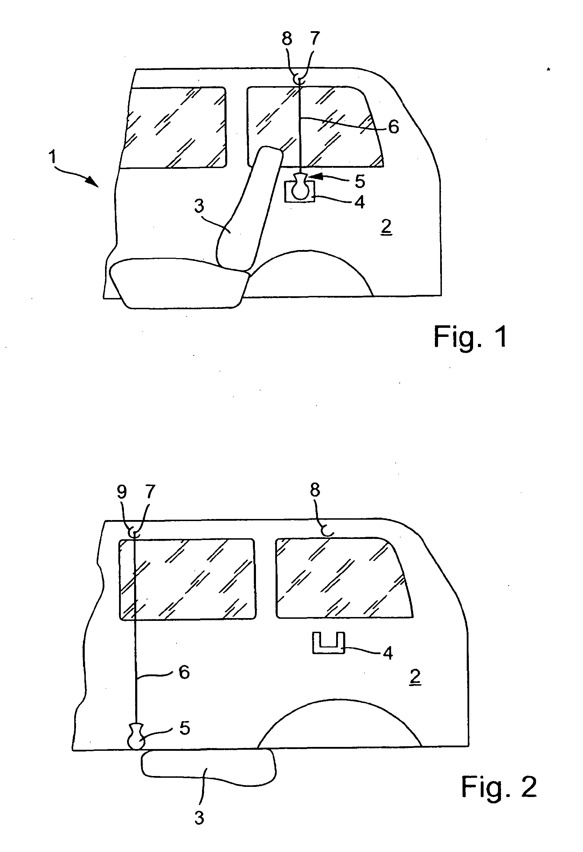

Ein Kraftfahrzeug in Form eines Kombi-Personenkraftwagens, einer Großraumlimousine, eines Vans, eines SUVs (sports utility vehicle) o.ä. weist gemäß den Fig. 1 und 2 einen Fahrzeuginnenraum 1 auf, der heckseitig einen Laderaum 2 umfasst. An den Laderaum 2 schließt zur Fahrzeugfront hin nach vorne eine Fondsitzanordnung an, die mit einer Rückenlehnenanordnung 3 versehen ist. Der Laderaum 2 weist an seinen gegenüberliegenden Seitewandbrüstungen unmittelbar hinter der Rückenlehnenanordnung 3 jeweils eine fahrzeugseitige Halterung 4 für die Befestigung einer Schutzvorrichtung 5 auf, die bei der dargestellten Ausführungsform als Trennnetzrollo gestaltet ist. Das Trennnetzrollo weist ein flexibles Flächengebilde in Form eines Trennnetzes 6 auf, das in zwei unterschiedlichen Schutzpositionen aufspannbar ist. In einer ersten, teilweise ausgezogenen Schutzposition erstreckt sich das Trennnetz 6 etwa von der Höhe einer Oberkante der Rückenlehnenanordnung 3 aus bis zu einem Dachbereich des Fahrzeuginnenraumes 1 (Fig.1). In der vollständig ausgezogenen Schutzposition (Fig. 2) erstreckt sich das Trennnetz 6 etwa von der Höhe eines Innenraumbodens bis zu dem Dachbereich. Das Trennnetz 6 weist an seinem in Auszugrichtung vorderen Stirnende ein formstabiles Auszugprofil 7 auf, das in dachseitige Halteaufnahmen 8 und 9 - je nach Positionierung - lösbar einhängbar ist.

Das Trennnetz 6 ist auf einer Wickelwelle 10 auf- und abwickelbar gehalten, die mit Hilfe stirnseitiger Lagerzapfen 11 in Seitenteilen 20 eine Gehäuseummantelung drehbar gelagert ist. Die Wickelwelle 10 ist lastaufnehmend ausgeführt. Die Gehäuseummantelung hat im wesentlichen Abdeck- und Blendenfunktion und ist in Leichtbauweise ausgeführt. Die Lagerzapfen 11 an den gegenüberliegenden Stirnseiten der Wickelwelle 10 ragen koaxial zur Drehachse D der Wickelwelle 10 in die offenen Stirnseiten der Wickelwelle hinein und sind dort über Energieabsorptionsmittel 13 axial fixiert in der Wickelwelle 10 gehalten. Die Lagerzapfen 11 weisen an ihren außen liegenden Stirnenden jeweils einen pilzförmigen Haltekopf 12 auf, der in korrespondierend gestalteten Aufnahmetaschen der jeweiligen fahrzeugseitigen Halterung 4 in montiertem Zustand zugfest verankert ist.

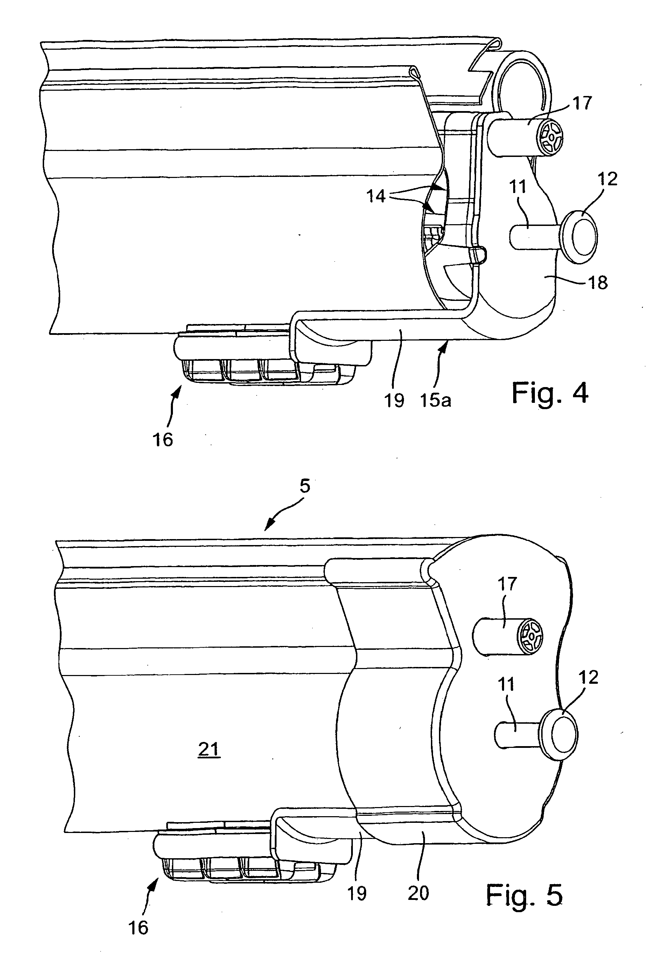

Um alternativ zu der stirnseitigen Verankerung der Wickelwelle 10 in den fahzeugseitigen Halterungen 4 auch eine längsseitige, vorliegend eine bodenseitige Befestigung der Wickelwelle 10 an einem Laderaumboden bzw. an einer Rückseite einer horizontal nach unten verschwenkten Rückenlehnenanordnung 3 zu ermöglichen, sind den gegenüberliegenden Stirnseiten der Wickelwelle 10 zwei Beschläge 15a und 15b zugeordnet. Jeder Beschlag, 15a, 15b ist als Winkelprofil gestaltet und weist einen radialen sowie einen axialen Profilschenkel auf, die an ihrem rechtwinkligen Übergangsbereich einstückig miteinander verbunden sind. Jeder Beschlag 15a, 15b ist formstabil gestaltet und vorzugsweise aus einem Stahlblech hergestellt. Jeder radiale Profilschenkel flankiert die entsprechende Stirnseite der Wickelwelle 10 in einer Radialebene der Drehachse D. Die beiden axialen Profilschenkel der Beschläge 15a und 15b erstrecken sich parallel zu der Drehachse D von den Stirnseiten der Wickelwelle 10 ausgehend zur Mitte der Wickelwelle hin, jedoch in radialem Abstand zur Oberfläche der Wickelwelle 10. Die beiden axialen Profilschenkel der Beschläge 15a, 15b sind einander zugewandt und verlaufen über einen Teilbereich der Länge der Gehäuseummantelung im Bereich einer Unterseite der Gehäuseummantelung. Die beiden axialen Profilschenkel 19 (Fig. 4 und 5) weisen Befestigungsmittel 16 auf, um die Wickelwelle 10 einschließlich der Gehäuseummantelung bodenseitig gemäß Fig. 2 an einer entsprechenden Befestigungsaufnahme der Rückseite der Rückenlehnenanordnung 3 zu verankern. Die Befestigungsmittel 16 sind lastaufnehmend mit den axialen Profilschenkeln der Beschläge 15a, 15b verbunden. Der axiale Profilschenkel 19 jedes Beschlages 15a, 15b stellt einen Verankerungsortsatz im Sinn der Erfindung dar.

Die radialen Profilschenkel 18 (Fig. 4) der Beschläge 15a und 15b weisen koaxial zur Drehachse D Lagerbohrungen auf, um die Lagerzapfen 11 an den gegenüberliegenden Stirnseiten der Wickelwelle 10 aufzunehmen.

Bei einer bevorzugten Ausgestaltung der Erfindung ist vorgesehen, die Energieabsorptionsmittel 13 zusätzlich als Gleitlager auszuführen, wodurch die Wickelwelle 10 mittels dieser Gleitlager drehbeweglich auf den Lagerzapfen 11 gelagert ist. Die Lagerzapfen 11 hingegen sind in montiertem Zustand innerhalb der fahrzeugseitigen Halterung 4, 4b drehfest fixiert. Bei dieser Ausgestaltung können die Lagerzapfen 11 mit den radialen Profilschenkeln der Beschläge 15a und 15b fest verbunden sein, da die Wickelwelle 10 relativ zu den in montiertem Zustand feststehenden Lagerzapfen 11 drehbeweglich gelagert ist.

Die bodenseitige Befestigung der Wickelwelle 10 ist kombiniert mit einem vollständigen Auszug des Trennnetzes 6, bei dem das Trennnetz 6 lediglich noch mit seinem in Auszugrichtung rückseitigen Stirnende an der Wickelwelle 10 befestigt bleibt.

Um auch für eine teilweise ausgezogene Schutzposition des Trennnetzes 6 (Fig. 1) eine sichere Rückhaltefunktion zu erzielen, wird in dieser teilweise ausgezogenen Schutzposition des Trennnetzes 6 die Wickelwelle 10 mittels einer Wickelwellenblockiereinheit 14 blockiert. Die Wickelwellenblockiereinheit 14 entspricht einer Blockiereinheit für eine Wickelwelle, wie sie aus der DE 197 10 786 C1 bekannt ist. Der Inhalt dieser Druckschrift wird im Hinblick auf die Gestaltung der Wickelwellenblockiereinheit 14 hiermit zum Gegenstand dieser Offenbarung gemacht. Die bekannte Blockiereinheit weist eine Sperrklinke auf, die ab einem vorgegebenen Auszugweg des Trennnetzes 6 eine weitere Drehung der Wickelwelle 10 blockiert. Das Einfallen der Sperrklinke erfolgt über eine mechanische Sensorik, die den Auszugweg des Trennnetzes 6 erfasst. Hierzu kann entweder mechanisch die Dicke der auf der Wickelwelle 10 befindlichen Wickellagen erfasst werden, oder ein Zählfinger zählt die Anzahl der Umdrehungen der Wickelwelle. Die Wickelwellenblockiereinheit 14 kann auch gemäß anderer Ausgestaltungen der DE 197 10 786 C1 ausgeführt sein. So ist es möglich, die Sperrklinke auch unabhängig von dem Auszugweg des Trennnetzes 6, aber abhängig von einer Auszieh- oder Rückholbewegung der Wickelwelle 10 zu lösen oder in Eingriff zu bringen. Die Wickelwellenblockiereinheit 14 weist ein Blockiergehäuse auf, das die verschiedenen Funktionsteile der Wickelwellenblockiereinheit 14 umgibt. Dieses Blockiergehäuse ist mittels eines Stützzapfens 17 drehmomentaufnehmend abgestützt an dem der Wickelwellenblockiereinheit 14 benachbarten radialen Profilschenkel des Beschlages 15a. Der Stützzapfen 17 ragt exzentrisch zur Drehachse D achsparallel von dem Blockiergehäuse der Wickelwellenblockiereinheit 14 aus nach außen ab und erstreckt sich damit parallel zu den zugeordneten Lagerzapfen 11 der entsprechenden Stirnseite der Wickelwelle 10. Der radiale Profilschenkel 18 des Beschlages 15a ist über den Lagerzapfen 11 hinaus bis zu dem Stützzapfen 17 nach oben gezogen und weist eine Aussparung auf, in der der Stützzapfen 17 formschlüssig aufgenommen ist. Bei der Ausführungsform nach den Fig. 4 und 5 ist der Stützzapfen 17 zylindrisch gestaltet. Demzufolge weist eine Durchtrittsbohrung, die die Aussparung des radiale Profilschenkels 18 bildet, einen auf den Durchmesser des Stützzapfens 17 abgestimmten Kreisdurchmesser auf.

Dem Stützzapfen 17 ist im Bereich der fahrzeugseitigen Halterung 4a eine korrespondierend gestaltete Aufnahmetasche zugeordnet, die den Stützzapfen 17 derart umschließt, dass ein von dem Stützzapfen 17 aufgenommenes Drehmoment in die fahrzeugseitige Halterung abgeleitet wird. Wenn die Wickelwelle 10 nicht im Bereich der fahrzeugseitigen Halterungen 4a, 4b, sondern bodenseitig mittels ihrer Befestigungsmittel 16 gehalten ist, werden auf den Stützzapfen 17 wirkende Drehmomente in dem steifen und lastaufnehmenden Profilschenkel 18 des Beschlages 15a aufgenommen und über die Befestigungsmittel 16 zum Fahrzeugboden hin, vorliegend zu der dem Fahrzeugboden verlängernden Rückenlehnenanordnung 3, abgeleitet. Das Seitenteil 20 der Gehäuseummantelung umgibt im komplettierten Zustand der Schutzvorrichtung den Beschlag 15a wie auch den Beschlag 15b außenseitig und weist entsprechende Durchtritte für die Aufnahme der Lagerzapfen 11 und des Stützzapfens 17 auf.

## Patentansprüche

1. Schutzvorrichtung für einen Fahrzeuginnenraum mit einem flexiblen Flächengebilde (6), das auf einer Wickelwelle (10) zwischen wenigstens einer etwa in Fahrzeughochrichtung aufgespannten Schutzposition und einer auf die Wickelwelle (10) aufgewickelten Ruheposition auf- und abwickelbar gehalten ist, wobei die Wickelwelle (10) lastaufnehmend gestaltet und an gegenüberliegenden Seitenteilen drehbar gelagert ist, **dadurch gekennzeichnet, dass** jedem Seitenteil ein lastaufnehmender Beschlag (15a, 15b) zugeordnet ist, der einen - auf eine Drehachse (D) der Wickelwelle (10) bezogen - achsparallel zu einer Mitte der Wickelwelle (10) weisende Verankerungsfortsatz (19) aufweist, der radial nach außen abragende Befestigungsmittel (16) zur Verankerung der Wickelwelle (10) an einer Rückenlehnenanordnung (3) eines Fahrzeugsitzes oder an einem Innenraumboden umfasst.

2. Schutzvorrichtung nach Anspruch 1 **dadurch gekennzeichnet, dass** eine Wickelwellenblockiereinheit (14) vorgesehen ist, die drehmomentaufnehmend an einem der lastaufnehmenden Beschläge (15a) abgestützt ist.

3. Schutzvorrichtung nach Anspruch 2 **dadurch gekennzeichnet, dass** die Wickelwellenblockiereinheit (14) einen achsparallel zur Drehachse (D) der Wickelwelle (10) abragenden Stützzapfen (17) aufweist, der formschlüssig an dem Beschlag (15a) gehalten ist.

4. Schutzvorrichtung nach Anspruch 1, **dadurch gekennzeichnet, dass** die beiden lastaufnehmenden Beschläge (15a, 15b) als Winkelprofile gestaltet sind, die jeweils einen in einer Radialebene der Drehachse (D) der Wickelwelle (10) erstreckten, radialen Profilschenkel (18) und einen den Verankerungsfortsatz bildenden axialen Profilschenkel (19) umfassen, wobei der radiale Profilschenkel (18) einen koaxial zur Drehachse (D) der Wickelwelle (10) nach außen abragenden Lagerzapfen (11) aufnimmt, und wobei der axiale Profilschenkel (19) mit dem wenigstens einen Befestigungsmittel (16) versehen ist.

5. Schutzvorrichtung nach Anspruch 4, **dadurch gekennzeichnet, dass** der radiale Profilschenkel (18) eine Aussparung zur formschlüssigen Aufnahme des Stützzapfens (17) der Wickelwellenblockiereinheit (14) aufweist.

6. Schutzvorrichtung nach Anspruch 1, **dadurch gekennzeichnet, dass** die Lagerzapfen (11) der Wickelwelle die radialen Profilschenkel (18) der Beschläge (15a, 15b) durchdringen und an ihren Stirnenden mit aufgeweiteten Halteköpfen (12) versehen sind, denen korrespondierende Halteaufnahmen an fahrzeugseitigen Halterungen (4a, 4b) zugeordnet sind.

## Claims

1. Protection device for a passenger compartment of a vehicle, comprising a flexible planar structure (6) that is held on a winding shaft (10) to be windable and unwindable between at least a protective position, extended approximately in the vehicle vertical direction, and a wound up stationary position, wherein the winding shaft (10) is configured to be load-bearing and is rotationally supported on opposite side parts, **characterized in that**
each side part is assigned a load-bearing mounting (15a, 15b), which has an anchoring extension (19) facing - in relation of a rotational axis (D) of the winding shaft (10) - axially parallel to a centre of the winding shaft (10), the extension comprising a radially outwards protruding fastening means (16) for anchoring the winding shaft (10) to a backrest arrangement (3) of a vehicle seat or to an interior floor.

2. Protection device according to claim 1, **characterized in that** a winding shaft blocking unit (14) is provided and supported on one of the load-bearing mountings (15a) in a torque absorbing manner.

3. Protection device according to claim 2, **characterized in that** the winding shaft blocking unit (14) has a support pin (17) protruding axially parallel to the rotational axis (D) of the winding shaft (10), which pin is held on the mounting (15a) in a form-fitting manner.

4. Protection device according to claim 1, **characterized in that** the two load-bearing mountings (15a, 15b) have an angle profile design, each comprising a radial profile leg (18) extending in a radial plane of the rotational axis (D) of the winding shaft (10) and an axial profile leg (19) constituting the anchoring extension, wherein the radial profile leg (18) receives a bearing pin (11) protruding outwards coaxially in relation to the rotational axis (D) of the winding shaft (10), and wherein the axial profile leg (19) is provided with the at least one fastening means (16).

5. Protection device according to claim 4, **characterized in that** the radial profile leg (18) has a recess for receiving the support pin (17) of the winding shaft blocking unit (14) in a form-fitting manner.

6. Protection device according to claim 1, **characterized in that** the bearing pins (11) of the winding shaft penetrate the radial profile legs (18) of the mountings (15a, 15b) and are provided with enlarged retention heads (12) on their front ends, with corresponding retention recesses on vehicle related fixtures (4a, 4b) being assigned to the heads.

## Revendications

1. Dispositif de protection pour l'espace intérieur d'un véhicule avec un objet plat flexible (6), qui est maintenu sur un arbre d'enroulement (10) d'une façon enroulable et déroulable entre au moins une position de protection tendue sensiblement en direction verticale du véhicule et une position de repos enroulée sur l'arbre d'enroulement (10), dans lequel l'arbre d'enroulement (10) peut reprendre une charge et est supporté de façon rotative sur des parties latérales opposées, **caractérisé en ce qu'**une armature (15a, 15b) de reprise de charge est associée à chaque partie latérale et présente un prolongement d'ancrage (19) orienté - par rapport à un axe de rotation (D) de l'arbre d'enroulement (10) - de façon axialement parallèle à un milieu de l'arbre d'enroulement (10), qui comporte des moyens de fixation (16) saillant radialement vers l'extérieur pour l'ancrage de l'arbre d'enroulement (10) sur un dispositif de dossier (3) d'un siège de véhicule ou sur un fond de l'espace intérieur.

2. Dispositif de protection selon la revendication 1, **caractérisé en ce qu'**il est prévu une unité de blocage de l'arbre d'enroulement (14), qui est appuyée en reprenant un couple de rotation sur une des armatures de reprise de charge (15a).

3. Dispositif de protection selon la revendication 2, **caractérisé en ce que** l'unité de blocage de l'arbre de rotation (14) présente un tourillon d'appui (17) saillant de façon axialement parallèle à l'axe de rotation (D) de l'arbre d'enroulement (10), qui est maintenu par emboîtement sur l'armature (15a).

4. Dispositif de protection selon la revendication 1, **caractérisé en ce que** les deux armatures de reprise de charge (15a, 15b) sont configurées comme des profilés coudés, qui comprennent respectivement une aile de profilé radiale (18) étendue dans un plan radial de l'axe de rotation (D) de l'arbre d'enroulement (10) et une aile de profilé axiale (19) formant le prolongement d'ancrage, dans lequel l'aile de profilé radiale (18) contient un tourillon (11) saillant vers l'extérieur coaxialement à l'axe de rotation (D) de l'arbre d'enroulement (10), et dans lequel l'aile de profilé axiale (19) est munie dudit au moins un moyen de fixation (16).

5. Dispositif de protection selon la revendication 4, **caractérisé en ce que** l'aile de profilé radiale (18) présente une découpe pour le logement par emboîtement du tourillon d'appui (17) de l'unité de blocage de l'arbre d'enroulement (14).

6. Dispositif de protection selon la revendication 1, **caractérisé en ce que** les tourillons (11) de l'arbre d'enroulement traversent les ailes de profilé radiales (18) des armatures (15a, 15b) et sont munis à leurs extrémités frontales de têtes de maintien élargies (12), auxquelles sont associés des logements de maintien correspondants sur des supports (4a, 4b) solidaires du véhicule.
